# EUROPEAN PATENT APPLICATION

(11) **EP 1 193 627 A1**
(43) Date of publication of application: **03.04.2002**
(21) Application number: 01115480.4
(22) Date of filing: 27.06.2001
(51) Int. Cl.: G06F 17/60, G07F 7/10

(54) **Method and system for exchanging value points between IC cards**

(30) Priority: 28.06.2000 JP 2000194855
(71) Applicant: Hitachi, Ltd., Chiyoda-ku, Tokyo 101-8010 (JP)
(72) Inventor: Ishibashi, Akira, Hitachi, Ltd., Chiyoda-ku, Tokyo 100-8220 (JP); Sakashita, Masahiro, Hitachi, Ltd., Chiyoda-ku, Tokyo 100-8220 (JP); Nakagawa, Masayuki, Hitachi, Ltd., Chiyoda-ku, Tokyo 100-8220 (JP); Hirata, Shinya, Hitachi Capital Corporation, Tokyo 105-0003 (JP); Takeda, Masashi, Hitachi Capital Corporation, Tokyo 105-0003 (JP)
(74) Representative: Strehl Schübel-Hopf & Partner

(57) **Abstract**

A point exchange site (11) receive point exchange request from a member as a customer via a member terminal in the point exchange site or via a terminal such as a personal computer near the member. The point exchange site notifies the exchange request to each card company (12, 13) for the exchange request. Each card company converts the exchange point value according to an exchange rate to update a point balance, increased or decreased, of the customer. Or, the card company notifies the new exchange point value resultant from the conversion to the point exchange site. According to responses from the card companies, the point exchange site completes the point exchange for the card of the customer and notifies the point exchange completion to the customer.

## Description

### BACKGROUND OF THE INVENTION

The present invention relates to a point exchange technique for an integrated circuit (IC) card used, for example, as a credit card, and in particular, to a point exchange technique in which points convertable various services given from a card company to a person when the person uses the card can be exchanged for points of another card company.

In general, when a person buys an item or receives a service, if the person desires to pay a charge without directly using cash, there is a method to use, for example, a credit card. Each time when the user of the credit card pays a charge for a transaction by the credit card, the credit card company having issued the card gives, in general, points to the user (credit card). The points are calculated in proportion to the charge of the transaction. The points are accumulated to a total for each predetermined period of time. When the total points reach a predetermined value, the points can be exchanged for a gift or the like.

### SUMMARY OF THE INVENTION

For the credit card, the points given to the card for each use thereof is dedicated to the pertinent credit card company. That is, according to the points, the user of the card can receive only the services provided by the credit company for the following reasons. Each credit company desires to provide unique services distinguishable from services of the other credit companies. This makes it difficult for the credit companies to commonly use the points given to the users for the uses of the cards.

Therefore, after the user receives a service using some points, the remaining points cannot be efficiently used. When a user has a plurality of credit cards, there possibly occurs a case in which an attractive service of a credit company cannot be received using the points of one of the cards, but can be received if the points of another card is added to the points. In the present stage of the point exchange technique, the user cannot receive the desired service in the case described above.

It is therefore an object of the present invention to provide a point exchange method and a point exchange system in which to remove the drawback of the prior art, the points given to the user of a card such as a credit card are efficiently used, that is, the points can be efficiently used between cards of different brands or companies and the points of cards of different cardholder names can be collected.

According to the present invention, there is provided a point exchange method of exchanging points between cards to which points are given according to amounts of transactions using the cards. The method includes the steps of receiving a request for a point exchange from a customer, notifying the point exchange request to each card issuing company, receiving approval for the request from the company, and completing the point exchange between cards. The point exchange between cards is conducted between cards having one cardholder name and different brands, between cards having different cardholder names and different brands, or between cards having different cardholder names and one brand.

### BRIEF DESCRIPTION OF THE DRAWINGS

The present invention will be more apparent from the following detailed description, when taken in conjunction with the accompanying drawings, in which:
Fig. 1 is a block diagram showing a point exchange system in an embodiment of the present invention;
Fig. 2 is a diagram for explaining processing of ordinary card settlement;
Fig. 3 is a table for explaining contents of customer data;
Fig. 4 is a flowchart for explaining processing by a server in a point exchange site in a point exchange operation;
Fig. 5 is a flowchart for explaining processing by a server in card company A in a point exchange operation;
Fig. 6 is a flowchart for explaining processing by a server in card company B in a point exchange operation;
Fig. 7 is a block diagram showing constitution of a point exchange system in another embodiment of the present invention; and
Fig. 8 is a flowchart for explaining processing at point exchange in another embodiment of the present invention.

### DESCRIPTION OF THE EMBODIMENTS

Referring to the accompanying drawings, description will be given in detail of an embodiment of a point exchange method and an embodiment of a point exchange system according to the present invention.

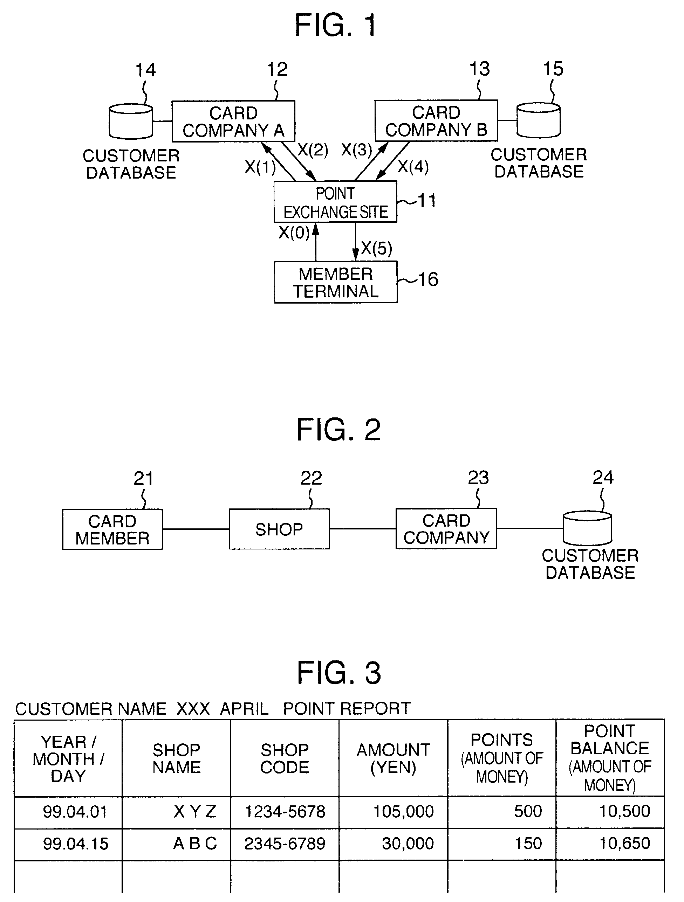

Fig. 1 shows constitution of a point exchange system in an embodiment of the present invention in a block diagram. Fig. 2 schematically shows processing at ordinary card settlement. Fig. 3 shows contents of customer data. The configurations of Figs. 1 and 2 includes a point exchange site 11, card companies 12, 13, and 23, customer databases (DB) 14, 15, and 24, a member terminal 16, a card member 21, and a shop 22. The card company in the present invention is a company which issues points and may be, for example, a credit company, a shop, an organization of a group of shops to issue points, or a point issuing organization of an airline.

The point exchange system in an embodiment of the present invention includes, as shown in Fig. 1, a point exchange site 11 arranged according to the present invention, a plurality of card companies A 12 and B 13, and a member terminal 16. These constituent components are connected to each other via a network, not shown. The card companies 12 and 13 respectively issue credit cards having respective brands thereof and intermediate a transaction relating to charge between a customer and a member shop at occurrence of the transactions in member shops. Each of the card companies 12 and 13 has a processing server, not shown, to conduct processing at occurrence of a transaction for the customer and processing at point exchange according to the present invention. The point exchange site 11 has a processing server which can be connected via a network or directly to the member terminal 16 arranged in the point exchange site 11. The processing server connects the member terminal to each of the card companies 12 and 13 to execute point exchange processing according to the system. The member terminal 16 includes a card reader/writer which can handle a credit card in the form of a card of magnetic stripe type or an IC card. The member terminal 16 can be implemented, for example, by a personal computer (PC) including a communicating function.

Assume, for example, that a card member as a customer buys an item in a member shop and pays its charge by the card. In this case, as shown in Fig. 2, the processing in which a credit card member 21 buys an item in a member shop 22 and pays its charge by the card is initiated as follows. When the card of the customer is installed in a member shop terminal arranged in the shop 22, the terminal is connected to a card company 23 having issued the credit card and then transaction information is sent to the card company 23. The card company 23 registers the transaction information to a customer database 24. In this operation, information of a point value given to the customer for the transaction and an accumulated point value are added to the transaction information.

When the credit card used for the transaction is a magnetic stripe card, the point value given to the customer for the transaction and the accumulated point value are only registered to the customer database of the card company. On the other hand, when the credit card used for the transaction is an IC card, the point value given to the customer for the transaction and the accumulated point value may also be registered to the IC card.

Ordinarily, the transaction information registered to the customer database is totaled for each predetermined period of time and for each customer into, for example, a detailed report in the form as shown in Fig. 3. The report is sent to the pertinent customer. Recorded in the detailed report are, for example, "year, month, day of use of card", "shop name", "shop code", "amount paid", "points", and "accumulated point balance". The points and the accumulated points may be converted into amounts of money.

The customer can exchange the points given for each use of the credit card as above for points of another credit card company via the point exchange site 11 constituting a system according to the present invention.

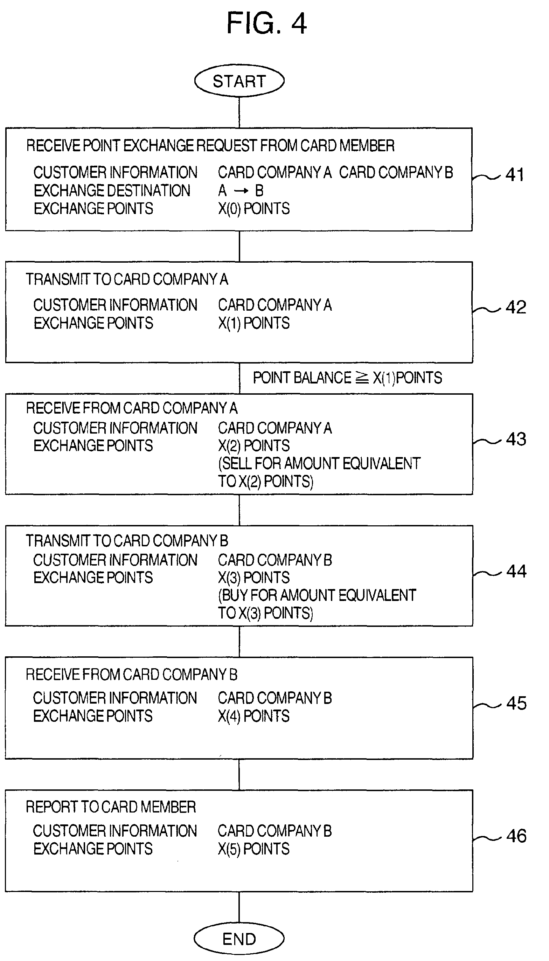

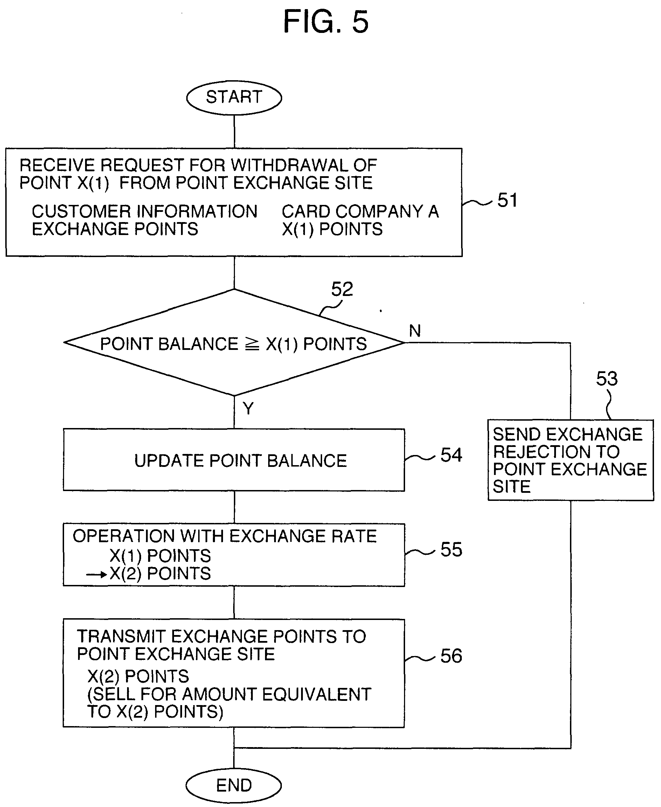

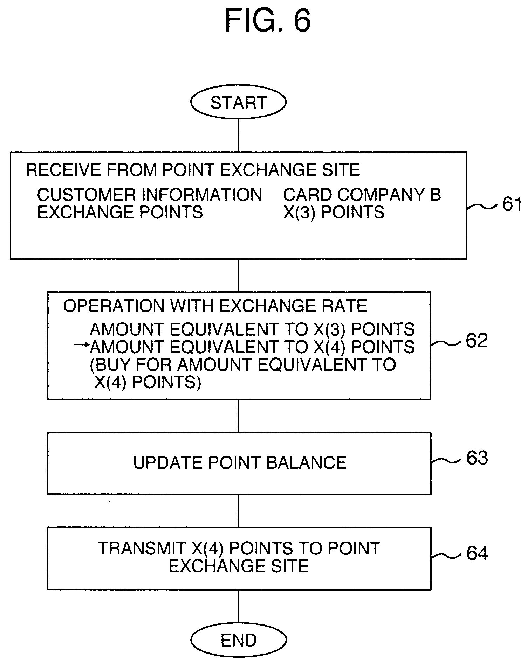

Fig. 4 is a flowchart to explain point exchange processing executed by a server in a point exchange site. Fig. 5 is a flowchart to explain point exchange processing executed by a server in card company A. Fig. 6 is a flowchart to explain point exchange processing executed by a server in card company B. Referring now to the flowcharts, the point exchange processing will be described. For simplification of explanation, it is assumed that a customer having two cards of the respective credit card companies A and B desires to exchange points of the card companies. The processing flow of Fig. 4 will be first described. (1) The server of the point exchange site 11 receives a point exchange request of the card member from the member terminal 16. The point exchange request includes information such as names of card companies included in the information of customer requiring the point exchange, namely, card companies A and B in this case; information indicating a source and a destination for the point exchange, namely, information that points of card company A are converted into points of card company B in this case; and a point value of card company A to be converted, for example, X(0) (step 41). (2) The server of the point exchange site 11 then transmits a point purchase request for the point exchange to card company A. In this situation, the purchase request includes information such as customer information, information of card company A contained therein, and a point value X(1) of card company A to be exchanged. In this connection, the point exchange site 11 and card companies A and B have beforehand signed a contract that each card company pays as a commission about several percent of the exchanged points to the point exchange site 11. In the point exchange above, point value X(0) requested for the point exchange by the card member is converted into point value X(1) in consideration of the contract. The converted point value X(1) is sent to card company A (step 42). The commission of the point exchange site may be a constant fee. (3) Card company A confirms that the requested point value X(1) is equal to or less than the point balance of the customer having issued the point exchange request, conducts an operation using an exchange rate for the point value X(1) to obtain point value X(2) as a result, and sends point value X(2) to the point exchange site 11, which will be described later. The point exchange site 11 receives the information from card company A. In this case, card company A may sell the exchange points for the amount of point value X(2) (step 43). (4) Next, the point exchange site 11 conducts a calculation for point value X(2) from card company A in consideration of the commission to obtain point value X(3) as a result and then sends a point exchange request to card company B. When card company B approves the request, card company B notifies the approval to the point exchange site 11. In this situation, card company B may buy the exchange points for the amount of point value X(3) (step 44). (5) The server of the point exchange site 11 receives from card company B the approval of purchase of the exchange points. The exchange point value from card company B is point value X(4) resultant from a calculation conducted for point value X(3) using an exchange rate for point value X(3) (step 45). (6) The server of the point exchange site 11 reports a successful point value exchange to the card member having issued the point exchange. This report also includes information that the point value of card company B is X(5). Point value X(5) is resultant from a calculation conducted for exchange point value X(4) from card company B in consideration of the commission received by the point exchange site according to the contract described above (step 46). In the step, point value X(5) may be reported on request from the card member or the card company. If the point storing medium is IC card of the customer, the points may be written in the IC card in the step.

Referring next to the flowchart of Fig. 5, description will be given of operation of the server in card company A. The processing begins at an operation to receive a request sent from the point exchange site 11 in step 42 of Fig. 4. (1) The server of card company A receives from the point exchange site 11 a withdrawal request of point value X(1) for the point exchange. As already described, the received information includes the customer information, information of card company A contained therein, and point value X(1) of card company A for the point exchange (step 51). (2) The server of card company A retrieves the pertinent customer information from the customer database 14 thereof and makes a check to determine whether or not the point balance of the customer is larger than exchange point value X(1). If the point balance is smaller than exchange point value X(1), the point exchange is impossible and hence the server of card company A transmits "rejection of the point exchange" to the point exchange site 11 and then terminates the processing (steps 52 and 53). (3) If the point balance of the customer is larger than or equal to exchange point value X(1) in step 52 and hence the point exchange is possible, the server of card company A updates the point balance of the customer in the customer database 14. This processing may be processing in which a value obtained by subtracting exchange point value X(1) from the point balance of the customer is registered as a new balance to the customer database 14 (step 54). (4) The server of card company A then conducts a calculation for point value X(1) with an exchange rate for X(1) to obtain exchange point value X(2) and then sends the result to the point exchange site 11 to approve the point exchange. The point exchange site 11 receives the information from card company A. In this case, the card company a may sell the exchange points for the amount of point value X(2) (steps 55 and 56).

Next, operation of the server of card company B will be described by referring to the flowchart shown in Fig. 6. The processing starts at processing to receive the request sent from the point exchange site 11 in step 44 of Fig. 4. (1) From the point exchange site, the server of card company B receives a request for addition of exchange point value X(3). As above, the received information includes the customer information, information of card company B contained therein, and point value X(3) to card company B for the point exchange (step 61). (2) The server of card company B conducts a calculation for point value X(3) using an exchange rate for x(3) to obtain exchange point value X(4) and then updates the point balance of the customer in the database 15 of card company B. The processing may be processing in which a value obtained by adding exchange point value X(3) to the point balance of the customer is registered as a new balance. In this case, card company B may buy the exchange points for the amount of point value X(4) (steps 62 and 63). (3) The server of card company B then transmits exchange point value X(4) resultant from the calculation with an exchange rate to the point exchange site 11 to approve the point exchange, and then terminates the processing (step 64).

In the point exchange processing in the embodiment of the present invention, the point balance after the point exchange is stored in the customer database of each card company for the management thereof. When the card such as a credit card of the customer is an IC card, the point balance after the point exchange can also be stored in the IC card of the customer. In this case, the processing is executed by the member terminal 16 having received the pertinent report in step 406 shown in Fig. 4.

The processing executed by the point exchange site 11 and the card companies 12 and 13 can be executed by processing programs. The processing programs can be stored on a portable medium such as a magnetic disk or an optical disk to be supplied to the user.

In the description of the embodiment of the present invention, points are exchanged between different cards. However, it is also possible that the point value is converted into an amount of money for the selling and the buying for the point exchange.

Additionally, in the example of the point exchange processing of the embodiment according to the present invention, the points are exchanged between the cards of different brands possessed by one person for simplicity of explanation. However, according to the present invention, the point exchange can be achieved between cards of different brands and different cardholder names, between the cards of the same brand and different cardholder names, and between the cards of different brands and different persons. In this case, it is only necessary that a database is installed in the point exchange side 11 to store information of the customers requesting the point exchange. In response to a point exchange request form a customer, information of the customer requesting the point exchange, a point value for the point exchange, a partner card company, and the like are beforehand stored in the database. According to the information of the database, the server of the point exchange site 11 executes processing similar to that described above to notify the successful point exchange to each member as the customer.

In the point exchange, since popularity varies between the card companies, the point exchange may be conducted in an imbalanced manner. This difficulty may be coped with, for example, by changing the point exchange rate between the card companies.
The point exchange rate and the exchange commission are appropriately updated depending on the point market price, the popularity of the card company, the point, or the point issuing company. They may be updated at regular intervals.

According to the embodiment of the present invention, each customer can receive a point service of a desired card company, and the card companies can expect increase in the total transactions using the cards.

In the embodiment, when a customer buys an item or receives a service, the customer does not pay the charge in cash. The customer may pay by a card having stored electronic money or a debit card. Also in this situation, points are given to the customer according to the use of the card. The point exchange can also be conducted in this case according to the present invention. When a customer pays in cash for a purchased item, points are stored in the card in some cases. The point exchange can be similarly conducted in this case according to the present invention.

Description will now be given of a second embodiment.

The description described above is applicable to a case in which the card itself has an identifier and a rewritable memory and a case in which the card itself has an identifier and a non-rewritable memory. Description will now be given of an embodiment effectively applicable to the latter case, i.e., a case in which the card itself has an identifier and a non-rewritable memory.

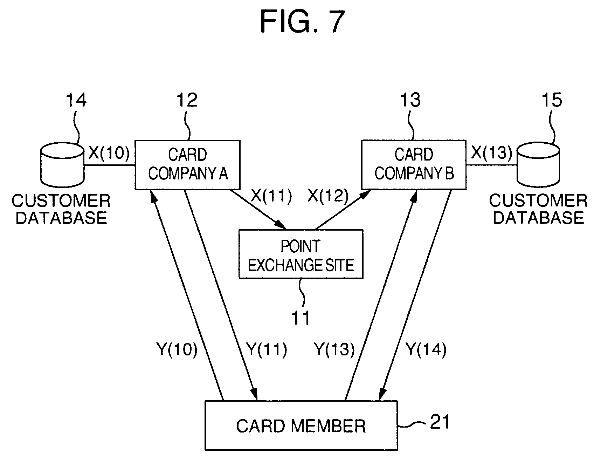

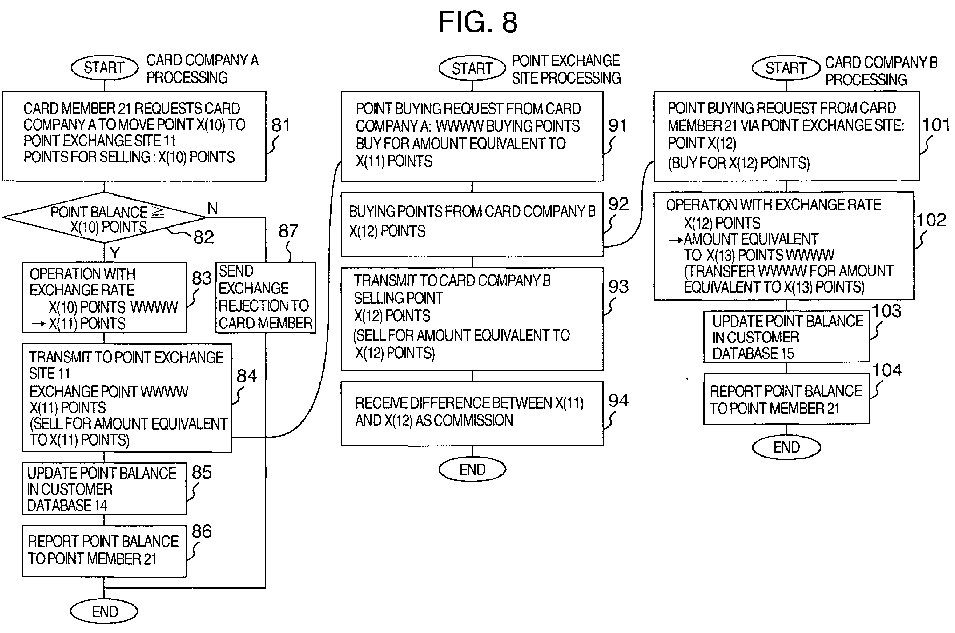

The embodiment will be described in detail by referring to Figs. 7 and 8. First, assume that a card member 21 beforehand knows a current point balance of his or her card according to, for example, a point balance report received from the card company. When the card member 21 desires to transfer his or her points of card company A (12) to card company B (13), the card member 21 requests card company A to transfer a point value X(10) from the point balance to the point exchange site 11 via route Y(10) (step 81). The point balance of the card member is determined to be equal or larger than X(10) (step 82). If determined, the process goes to step 83. Assume that a rate to buy the points varies depending on popularity of card company A. The card member 21 may use the internet, an e-mail, a document, a telephone, or the like to issue the request to card company A.

In general, card company A receives a commission for the operation to draw the points from the own points for the transfer of the points.
Therefore, card company A sends, to the point exchange site 11, a point value X(11) obtained by subtracting the commission from the point value requested for the transfer (steps 83, 84, 91). In some card companies, the commission which is the difference between X(10) and X(11) is zero or less than zero according to a business policy thereof. Such status may occur when considering to enclose the customers or lead the point exchange.

Resultantly, card company A updates the point balance in the customer database 14 by subtracting X(10) (= commission + X(11)) from the existing point balance (step 85). The updated result is later reported via rout Y(11) to the card user. The report is delivered using the internet, an e-mail, a document, or the like (step 86).

The card member temporarily keeps part of his or her points in the point exchange site 11. When the card member desires to transfer the points to card company B, the card member checks the point exchange rates, which daily change according to popularity of the respective card companies, by referring to, for example, a homepage of the point exchange site or a point exchange rate report issued from a third organization, which will not be described in this specification. When the card member recognizes the point price for the selling and the purchasing and determines that the selling of the points is advantageous for him or her, the card member requests card company B via route Y(13) for a transfer of points from the point exchange site to card company B (step 101). The request can be issued using the internet, a document, a telephone, or the like.

In response to the request, card company B transfers predetermined points X(12) from the point exchange site thereto (steps 92, 93, 101).

The point exchange site 11 receives as the commission the difference between X(11) and X(12) (step 94). The value of X(12) varies depending on the point exchange rates at the point of time and the commission may be zero or less than zero according to a business policy of the card company as described above. Such status may occur when considering to enclose the customers or lead the point exchange.

Card company B adds X(13) obtained by subtracting a predetermined commission thereof from X(12) to the point balance of card company B (step 102). As a result, the point balance of the customer database 15 of card company B is accordingly updated (step 103).

In an ordinary idea of the commission, the value of points of the pertinent customer is lowered by the commission of card company B, i.e., X(12) - X(13). However, in some cases, to gather many customers, card company B takes a strategy to collect points of other card companies and hence buys the points of other card companies with a higher exchange rate. In this case, the value of X(12) - X(13) becomes negative. There may also be a case in which card company B buys the points of other card companies without commission, namely, the commission to buy the points is set to zero. As a result, the point balance of card company B is increased and is notified via route Y(14) to the card member (step 104).

In the description, the points are moved from card company A to card company B. However, this is only an example. According to requests from card members, the points can also be transferred to a plurality of card companies C, D, and E. For simplicity of explanation, although the point value is expressed as X(n), the unit price of the point varies among the card companies in ordinary cases. Therefore, it is to be appreciated that this value represents a value obtained by converting the original value to the standard unit price.

Actually, after the points are thus transferred to the destination card company, the card member may exchange the points for another valuable item. The point exchange has been explained using the one time exchange example. The points of card company B once exchanged may be exchanged to the points of card company A again or to the points of card company C. It may be possible to collect the points possessed by the family members to one family member in card company A or distribute the points possessed by one family member to other family members. It may also possible to hand over own points to other person. This invention may be applied to the case the points are stored in storage medium in a computer or a portable telephone since the embodiments store the points in the card.

According to the present invention described above, there can be provided a point exchange method and a point exchange system in which the points can be efficiently used between cards of various brands and points of cards having different cardholder names of a family or the like can be collected.

The specification and drawings are, accordingly, to be regarded in an illustrative rather than a restrictive sense. it will, however, be evident that various modifications and changes may be made thereto without departing from the broader spirit and scope of the invention as set forth in the claims.

## Claims

1. A point exchange method of exchanging points between cards to which points are given according to amounts of transactions using the cards, comprising the steps of:
receiving a request for a point exchange from a customer (41);
notifying the point exchange request to each card issuing company (42, 44);
receiving approval for the request from the company (43, 45);
completing the point exchange between cards (44 - 46);
calculating a point of own company according to an exchange rate between an exchange partner card and own card; and
approving the point exchange (Fig. 4).

2. A point exchange method according to claim 1,
wherein the point exchange between cards is conducted between cards having one cardholder name and different brands, between cards having different cardholder names and different brands, or between cards having different cardholder names and one brand.

3. A point exchange method according to claim 1, further comprising the steps of:
after said request receiving step, said request notifying step, and said approval receiving step, receiving, when completing the point exchange between cards (44 - 46), points as a commission from the customer requesting the point exchange (94, Fig. 8).

4. A point exchange system for exchanging points between cards to which points are given according to amounts of transactions using the cards, comprising:
a server of a point exchange site (11) and;
a server of a card company (12, 13) connected to said server of the point exchange site via a network,
wherein said server of said point exchange site comprises:
means for receiving a request for a point exchange via a member terminal (16) from a customer;
means for notifying the point exchange request to each card issuing company and for receiving approval for the request from the card issuing company;
means for calculating a point of own card company according to an exchange rate between an exchange partner card and own card and for approving the point exchange rate.

5. A point exchange system according to claim 4,
wherein the point exchange between cards is conducted between cards having one cardholder name and different brands, between cards having different cardholder names and different brands, or between cards having different cardholder names and one brand.

6. A recording medium having stored a processing program product to achieve a point exchange method, the processing program product comprising:
a processing program for receiving a request for a point exchange from a customer (41);
a processing program for notifying the point exchange request to each card issuing company and for receiving approval for the request from the company (42 - 46); and
a processing program for calculating a point of own company according to an exchange rate between an exchange partner card and own card and for approving the point exchange.

7. A point exchange program for achieving a point exchange method, comprising the steps of:
receiving a request for a point exchange from a customer (41);
notifying the point exchange request to each card issuing company and for receiving approval for the request from the company (42 - 45); and
calculating a point of own company according to an exchange rate between an exchange partner card and own card and for approving the point exchange.
